Europäisches Patentamt

European Patent Office

Office européen des brevets

(19)

(11) **EP 1 433 243 B1**

(12) **FASCICULE DE BREVET EUROPEEN**

(45) Date de publication et mention
de la délivrance du brevet:
**01.06.2005 Bulletin 2005/22**

(21) Numéro de dépôt: **02774682.5**

(22) Date de dépôt: **27.09.2002**

(51) Int Cl.$^7$: **H02M 3/07**

(86) Numéro de dépôt international:
**PCT/EP2002/011072**

(87) Numéro de publication internationale:
**WO 2003/030343 (10.04.2003 Gazette 2003/15)**

(54) **GENERATEUR DE HAUTE TENSION INCORPORE DANS UN CIRCUIT INTEGRE**

IN EINE INTEGRIERTE SCHALTUNG EINGEBAUTER HOCHSPANNUNGSGENERATOR

HIGH VOLTAGE GENERATOR INCORPORATED IN AN INTEGRATED CIRCUIT

(84) Etats contractants désignés:
**CH DE GB IT LI**

(30) Priorité: **27.09.2001 FR 0112436**

(43) Date de publication de la demande:
**30.06.2004 Bulletin 2004/27**

(73) Titulaire: **EM Microelectronic-Marin SA
2074 Marin (CH)**

(72) Inventeur: **PEROTTO, Jean-Félix
CH-2013 Colombier (CH)**

(74) Mandataire: **Vigand, Philippe et al
ICB,
Ingénieurs Conseils en Brevets SA,
Rue des Sors 7
2074 Marin (CH)**

(56) Documents cités:
**EP-A- 0 292 269          EP-A- 0 485 016
US-A- 5 394 320          US-A- 5 600 551**

• **RUSZNYAK A: "ONE-PIN OSCILLATORS AND
VOLTAGE MULTIPLIERS" IEEE CIRCUITS AND
DEVICES MAGAZINE, IEEE INC. NEW YORK, US,
vol. 14, no. 5, septembre 1998 (1998-09), pages
52-54, XP000831655 ISSN: 8755-3996**

## Description

La présente invention est relative à un générateur de haute tension incorporé dans un circuit intégré. Un tel générateur correspondant à la première partie de la revendication 1 a été divulgué par la demande de brevet européenne EP 0 485 018 A2.

Plus particulièrement, l'invention concerne un générateur de haute tension destiné notamment à permettre la lecture et l'écriture de données dans une mémoire EEPROM.

Les générateurs de haute tension de ce type que l'on appelle aussi "pompe de charges" (charge pump) comportent en général une série d'élévateurs de tension composés de capacités et de diodes (ou de transistors connectés en diodes) qui multiplient une tension d'entrée par un facteur donné, la tension d'entrée étant typiquement la tension d'alimentation du circuit intégré. On trouve une description d'un tel générateur de haute tension par exemple dans un article de J.F. Dickson, paru le 3 juin 1976 dans IEEE Journal Of Solid State Circuits, Vol. SC. 11, n°3, pages 374-378, intitulé « On-chip high voltage generation in NMOS integrated circuits using an improved voltage multiplier circuit ».

Ainsi, classiquement, à partir d'une tension d'alimentation donnée de 2 Volts, par exemple, en entrée de la pompe de charges, il est possible d'engendrer une tension jusqu'à dix fois supérieure, si la pompe de charges comporte par exemple 14 étages.

Un tel générateur à haute tension présente néanmoins quelques inconvénients. En effet, cela nécessite un circuit de structure relativement importante pour laquelle il convient de réserver de la place sur le circuit intégré.

De plus, l'intégration d'un tel circuit intégré dans des objets portables, tels que des téléphones, des cartes, ou même des ordinateurs, n'apportent pas des conditions d'autonomie optimales pour les besoins de ces objets. L'un des soucis majeurs, dans ce domaine, est de réduire la consommation d'énergie et d'utiliser une tension d'alimentation du circuit la plus faible possible afin notamment de prolonger la durée de vie des moyens d'alimentation.

La présente invention a pour but de pallier les inconvénients susmentionnés de l'art antérieur et notamment de fournir un générateur de haute tension du type générique indiqué, qui permet d'engendrer une tension de valeur élevée à l'aide d'une pompe de charges comprenant un nombre d'étages de multiplication nettement inférieur à celui qui était nécessaire dans les réalisations de la technique antérieure alternativement de réduire la consommation d'énergie en utilisant une tension d'alimentation du circuit moins élevée.

L'invention a donc pour objet un générateur de haute tension réalisé dans un circuit intégré et comprenant une pompe de charges dont la tension d'entrée est la tension d'alimentation du circuit intégré et qui est cadencée par des signaux d'horloge directs et complémentés, caractérisé en ce qu'il comprend des moyens pour ré-injecter une fraction de la tension issue de ladite pompe de charges à l'entrée où est appliquée ladite tension d'alimentation.

Grâce à ces caractéristiques, il est possible, comparativement aux générateurs de haute tension de la technique antérieure, d'obtenir une tension de valeur élevée à la sortie du générateur, avec un nombre d'étages de multiplication faible, ou en alternative, d'appliquer à l'entrée de la pompe de charges une tension de valeur nettement plus faible pour obtenir une tension élevée de valeur comparable.

Le générateur selon l'invention peut également présenter l'une ou plusieurs des particularités suivantes :

- lesdits moyens de ré-injection comprennent un réducteur adiabatique ;
- le coefficient de ré-injection desdits moyens de réinjection se situe dans la gamme allant de 0 à 1 ;
- le coefficient de ré-injection est égal à 0,5 ;
- ledit réducteur adiabatique comprend deux condensateurs et des moyens de commutation pour connecter ces condensateurs alternativement en série sur ladite tension issue de la pompe de charges, et en parallèle pour fournir ladite fraction de tension ;
- lesdits condensateurs sont d'égale capacité ;
- la fréquence de travail de ladite pompe de charges est égale à celle cadençant lesdits moyens de commutation.

L'invention a également pour objet un circuit intégré comprenant un générateur de haute tension tel que défini ci-dessus caractérisé en ce qu'il comprend une mémoire EEPROM alimentée par ledit générateur de haute tension.

D'autres caractéristiques et avantages de la présente invention apparaîtront au cours de la description qui va suivre, donnée uniquement à titre d'exemple et faite en se référant aux dessins annexés sur lesquels :

- la Figure 1 est un schéma simplifié d'un générateur de haute tension selon l'invention ;
- la Figure 2 est un schéma de principe d'un réducteur adiabatique utilisé dans le générateur de haute tension selon l'invention ;
- la Figure 3 est un schéma d'implémentation possible du réducteur adiabatique ; et
- la Figure 4 est un diagramme explicatif montrant l'allure de la tension de sortie du générateur en fonction de son courant de sortie, le diagramme comprenant notamment deux droites de charge.

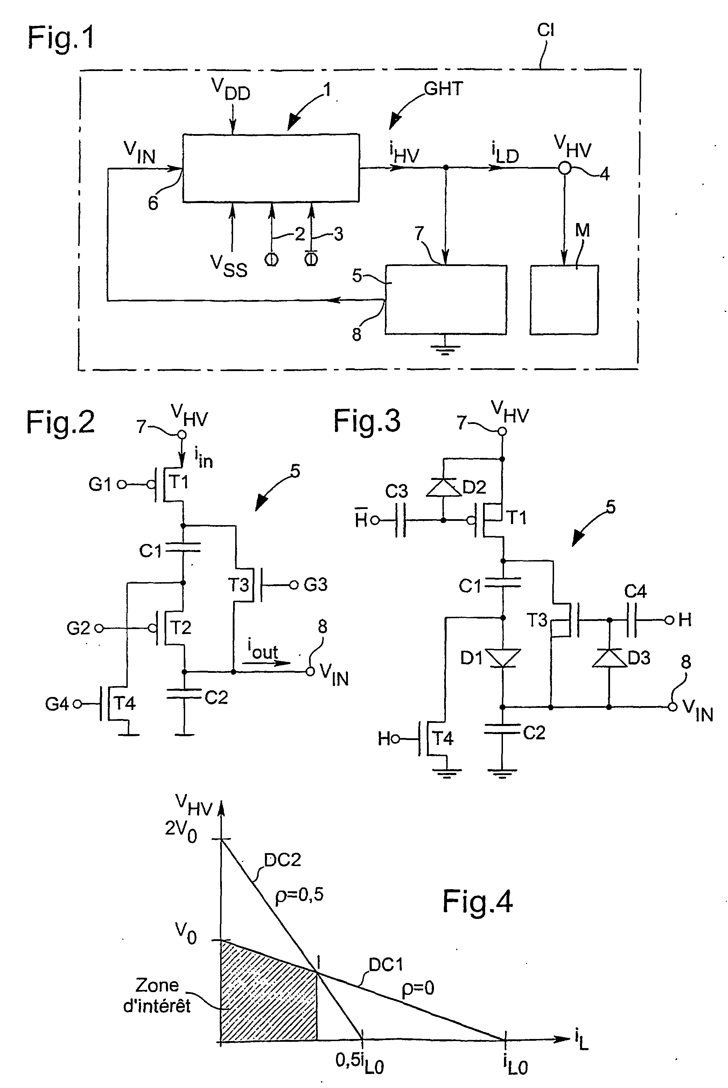

Sur la Figure 1, on a représenté un schéma simplifié d'un générateur de haute tension GHT selon l'invention. Il est supposé être incorporé à un circuit intégré CI et, dans cet exemple, alimenter une mémoire M de type EEPROM. Bien entendu, le circuit intégré CI peut comporter d'autres unités fonctionnelles qui n'ont pas été représentées.

Le générateur de haute tension GHT comporte un bloc de multiplication de tension 1 formé par une pompe de charges connue en soi, le fonctionnement de ce bloc 1 étant cadencé par des signaux d'horloge biphasés, directs $\Phi$ et complémentés $\overline{\Phi}$ appliqués respectivement sur des bornes 2 et 3 du bloc 1. Ceux-ci peuvent être prélevés par exemple sur une horloge générale (non représentée) du circuit intégré CI. On notera que les signaux d'horloge utilisés peuvent également être des signaux quadriphasés non entrelacés.

Le bloc multiplicateur 1 est alimenté par les tensions $V_{DD}$ et $V_{SS}$ qui sont également celles du circuit intégré CI. Il comprend également une borne de sortie 4, sur laquelle peut être prélevée la haute tension $V_{HV}$ que l'on désire obtenir. Le bloc multiplicateur 1 peut comprendre n étages de multiplication, le nombre d'étages étant choisi en fonction de la valeur de la tension de sortie $V_{HV}$ que l'on désire obtenir. Il peut être réalisé selon tout concept connu, par exemple celui qui est représenté à la Figure 5 de l'article précité.

Selon l'invention, le générateur de haute tension comprend également des moyens 5 de ré-injection d'une fraction $V_{in}$ de sa tension de sortie sur une borne d'entrée 6 du bloc 1. Si le bloc 1 est réalisé conformément au circuit représenté à la Figure 5 de l'article précité, cette borne 6 peut être connectée à la ligne de ce circuit sur laquelle est appliquée la tension $V_{DD}$.

Dans le mode de réalisation représenté, les moyens de ré-injection 5 sont formés par un circuit réducteur adiabatique, le terme adiabatique signifiant dans le présent contexte que ce réducteur ne dissipe pas d'énergie. En d'autres termes, le produit de sa tension d'entrée par son courant d'entrée est égal à celui de sa tension de sortie par son courant de sortie.

Le réducteur adiabatique 5 comprend une borne d'entrée 7 sur laquelle est appliquée la tension de sortie $V_{HV}$ régnant sur la borne de sortie 4. Il comprend également une borne de sortie 8 sur laquelle apparaît la tension $V_{in}$ qui est appliquée à la borne d'entrée 6 du bloc de multiplication 1.

Le réducteur adiabatique présente un coefficient de réduction ρ de telle sorte que la haute tension à vide $V_{HV}$ produite en sortie du générateur vaut

$$V_{HV} = \frac{V_{HV0}}{1-\rho}$$

expression dans laquelle $V_{HV0}$ représente la haute tension à vide du bloc multiplicateur 1 en l'absence du réducteur adiabatique 5, le coefficient ρ pouvant être compris entre 0 et 1. Dans ces conditions, la tension $V_{HV}$ pourrait, théoriquement du moins, être comprise entre $V_{HV0}$ et ∞. Cependant, on comprend que la tension de sortie maximale pouvant être obtenue est limitée par des contingences de construction du circuit intégré CI et notamment par la tension de claquage de ses composants.

La Figure 2 montre un schéma de principe d'un réducteur adiabatique utilisable dans le générateur de haute tension GHT selon l'invention. Ce réducteur est basé sur le principe des capacités commutées. Il comprend un montage en série composé, dans l'ordre entre la borne d'entrée 7 et la masse, du parcours drain-source d'un transistor T1, d'un premier condensateur C1, du parcours drain-source d'un transistor T2 et d'un second condensateur C2. Entre le noeud commun du transistor T1 et du condensateur C1 et le noeud commun du transistor T2 et le condensateur C2 est connecté le parcours drain-source d'un troisième transistor T3, tandis que le noeud commun entre ce dernier et le condensateur C2 forme également la borne de sortie 8 du réducteur adiabatique. Le noeud commun entre le condensateur C1 et le transistor T2 est relié à la masse par l'intermédiaire du parcours drain-source d'un transistor T4.

Le coefficient de réduction ρ est fixé par le circuit choisi, notamment en fonction du nombre des capacités commutées et de leurs valeurs respectives. De préférence, il est choisi égal à 0,5, ce qui est le cas avec deux condensateurs d'égale capacité, étant entendu qu'un circuit matérialisant cette valeur est commode à implémenter tout en conférant au générateur de haute tension un coefficient de multiplication global élevé.

Pour faire fonctionner ce circuit, les transistors T1 à T4 forment des moyens de commutation, leurs grilles étant commandées par des signaux d'horloge respectifs G1 à G4. La durée et la répartition temporelle de ces signaux sont choisies de façon appropriée pour que le fonctionnement suivant soit mis en oeuvre. Dans une première phase, les deux condensateurs C1 et C2 sont chargés en série sous la tension d'entrée $V_{HV}$, tandis que dans une seconde phase, les deux condensateurs sont mis en parallèle pour produire la tension de sortie $V_{IN}$ du réducteur 5, cette tension étant alors la moitié de la tension $V_{HV}$, ce qui donne ρ = 0,5. Les deux phases sont répétées périodiquement, la fréquence de répétition pouvant être égale à la fréquence de pompage du bloc de multiplication 1 (c'est à dire quelques centaines de kHz par exemple).

La Figure 3 montre un exemple d'implémentation pouvant être choisi pour le réducteur adiabatique 5. Ce montage comporte les transistors T1, T3 et T4 du schéma de principe de la Figure 2 connectés de la même façon par rapport aux deux condensateurs C1 et C2. Le transistor T2 est de préférence remplacé par une diode D1, si le circuit est construit en une technologie permettant la réalisation de diodes flottantes (par exemple des diodes en polysilicium).

Par ailleurs, le drain et la grille du transistor T1 sont connectés l'un à l'autre par l'intermédiaire d'une diode D2, et un condensateur C3 est relié à la grille du transistor T1 pour lui transmettre un signal d'horloge complémenté $\overline{H}$ dont la grille du transistor T4 reçoit la version directe H, tout comme la grille du transistor T3, le signal étant dans ce cas appliqué par l'intermédiaire d'un condensateur C4. Une diode D3 relie cette grille à la borne 8.

Dans le cas du mode de réalisation de la Figure 3, les diodes D2 et D3 ont pour rôle de polariser les transistors respectifs T1 et T3 afin de bloquer ceux-ci lorsque les impulsions d'horloge sont absentes.

Le générateur de haute tension selon l'invention permet, à partir d'une tension d'alimentation donnée, d'utiliser dans la pompe de charges 1 moins d'étages de multiplication pour obtenir une haute tension, qu'il n'en faudrait dans un générateur de haute tension dépourvu des moyens de ré-injection 5. Par exemple, à vide, une pompe de charges avec quatorze étages pourrait élever la tension de 2 V à 20 V environ alors qu'avec le générateur de haute tension selon l'invention dans lequel le coefficient $\rho = 0,5$, il suffit de ne prévoir que sept étages élévateurs dans la pompe à charges 1.

A l'inverse, si on prévoit dans le générateur de haute tension selon l'invention un même nombre d'étages élévateurs dans la pompe de charges 1 que dans une réalisation antérieure, il est possible, pour obtenir une haute tension comparable à celle obtenue dans une telle réalisation, de partir d'une tension d'alimentation plus faible. En reprenant l'exemple ci-dessus, et en considérant toujours la tension à vide, on peut obtenir la même haute tension de sortie de 20 V avec une tension d'alimentation de seulement 1,5 V, environ. Il est évident que ceci peut s'avérer très important dans les applications où on ne dispose que d'une faible tension d'alimentation (comme dans l'horlogerie électronique par exemple).

La Figure 4 illustre graphiquement le fonctionnement du générateur de haute tension selon l'invention, le diagramme montrant en ordonnées la haute tension de sortie $V_{HV}$ et en abscisses le courant de charge $i_{LO}$. La Figure montre une première droite de charge DC1 de la pompe de charges du bloc 1 en l'absence de la ré-injection ($\rho = 0$), tandis que la droite de charge DC2 concerne le cas où la ré-injection est présente avec $\rho = 0,5$.

On constate qu'à vide, c'est à dire, en l'absence de tout courant de charge $i_{LO} = 0$, la haute tension vaut $V_0$ sans ré-injection et $2V_0$ avec ré-injection.

De même, le courant de court-circuit est réduit de moitié, ce qui correspond à un quadruplement de la résistance interne.

Une zone d'intérêt du générateur peut être définie dans la région hachurée correspondant à une tension de sortie du générateur avec un coefficient de réduction vaut 0.5, supérieure à une tension de sortie de l'élévateur avec un coefficient de réduction nul. Cette zone est limitée par le point d'intersection I. Pour une fréquence de travail donnée, la zone d'intérêt se situe pour des courants inférieurs à 20% du courant de court-circuit, défini comme étant le courant fourni par le générateur lorsque la sortie est connectée à la masse. Il est toutefois possible d'augmenter la plage de courant de cette zone en augmentant la fréquence des signaux d'horloge, les deux étant liées.

Il est à noter que la description mentionne l'utilisation de transistors MOS notamment dans la réalisation du réducteur adiabatique, il est toutefois possible d'envisager un réducteur similaire réalisé avec des transistors de technologie bipolaire.

Il est bien entendu que la description n'est donnée qu'à titre d'exemple et que d'autres modes de réalisation, en particulier du réducteur adiabatique, peuvent faire l'objet de la présente invention.

**Revendications**

1. Générateur de haute tension (GHT) réalisé dans un circuit intégré (CI) et comprenant une pompe de charges (1) dont une tension d'entrée est une tension d'alimentation ($V_{DD}$) du circuit intégré (CI) et qui est cadencée par des signaux d'horloge directs ($\Phi$) et complémentés ($\overline{\Phi}$), **caractérisé en ce qu'**il comprend des moyens (5) pour ré-injecter une fraction ($V_{IN}$) d'une tension issue de ladite pompe de charges ($V_{HV}$) à l'entrée (6) où est appliquée ladite tension d'alimentation ($V_{DD}$).

2. Générateur selon la revendication 1, **caractérisé en ce que** lesdits moyens de ré-injection (5) comprennent un réducteur adiabatique.

3. Générateur selon l'une des revendications 1 ou 2, **caractérisé en ce que** le coefficient de ré-injection ($\rho$) desdits moyens de ré-injection (5) se situe dans la gamme allant de 0 à 1.

4. Générateur selon la revendication 3, **caractérisé en ce que** le coefficient de ré-injection ($\rho$) est égal à 0,5.

5. Générateur selon l'une des revendications 2 à 4, **caractérisé en ce que** ledit réducteur adiabatique (5) comprend deux condensateurs (C1, C2) et des moyens de commutation (T1 à T4; T1, T3, T4, D1) pour connecter ces condensateurs alternativement en série sur ladite tension ($V_{HV}$) issue de la pompe de charges, et en parallèle pour fournir ladite fraction de tension ($V_{IN}$).

6. Générateur selon la revendication 5, **caractérisé en ce que** lesdits condensateurs sont d'égale capacité.

7. Générateur selon l'une des revendication 5 ou 6, **caractérisé en ce que** la fréquence de travail de ladite pompe de charges (1) est égale à celle cadençant lesdits moyens de commutation (T1 à T4; T1, T3, T4, D1).

**8.** Circuit intégré comprenant un générateur de haute tension selon l'une quelconque des revendications 1 à 7, **caractérisé en ce qu'**il comprend une mémoire EEPROM (M) alimentée par ledit générateur de haute tension (GHT).

**Patentansprüche**

**1.** Hochspannungsgenerator (GHT), der in einer integrierten Schaltung (CI) verwirklicht ist und eine Ladungspumpe (1) umfasst, deren Eingangsspannung eine Versorgungsspannung ($V_{DD}$) der integrierten Schaltung (CI) ist und die durch direkte Taktsignale ($\Phi$) und komplementäre Taktsignale ($\bar{\Phi}$) getaktet wird, **dadurch gekennzeichnet, dass** er Mittel (5) umfasst, um einen Teil ($V_{IN}$) einer von der Ladungspumpe ausgegebenen Spannung ($V_{HV}$) wieder an jenen Eingang (6) anzulegen, an den die Versorgungsspannung ($V_{DD}$) angelegt wird.

**2.** Generator nach Anspruch 1, **dadurch gekennzeichnet, dass** die Wiederanlegemittel (5) einen adiabatischen Reduzierer umfassen.

**3.** Generator nach einem der Ansprüche 1 oder 2, **dadurch gekennzeichnet, dass** der Wiederanlegekoeffizient ($\rho$) der Wiederanlegemittel (5) in dem Bereich von 0 bis 1 liegt.

**4.** Generator nach Anspruch 3, **dadurch gekennzeichnet, dass** der Wiederanlegekoeffizient ($\rho$) gleich 0,5 ist.

**5.** Generator nach einem der Ansprüche 2 bis 4, **dadurch gekennzeichnet, dass** der adiabatische Reduzierer (5) zwei Kondensatoren (C1, C2) sowie Umschaltmittel (T1 bis T4; T1, T3, T4, D1) umfasst, wobei die Umschaltmittel diese Kondensatoren mit der von der Ladungspumpe ausgegebenen Spannung ($V_{HV}$) abwechselnd in Reihe schalten und parallel schalten, um den Spannungsanteil ($V_{IN}$) zu liefern.

**6.** Generator nach Anspruch 5, **dadurch gekennzeichnet, dass** die Kondensatoren die gleiche Kapazität besitzen.

**7.** Generator nach einem der Ansprüche 5 oder 6, **dadurch gekennzeichnet, dass** die Betriebsfrequenz der Ladungspumpe (1) gleich jener ist, mit der die Umschaltmittel (T1 bis T4; T1, T3, T4, D1) getaktet werden.

**8.** Integrierte Schaltung, die einen Hochspannungsgenerator nach einem der Ansprüche 1 bis 7 umfasst, **dadurch gekennzeichnet, dass** sie einen EE-PROM-Speicher (M) umfasst, der durch den Hochspannungsgenerator (GHT) versorgt wird.

**Claims**

**1.** High voltage generator (GHT) incorporated in an integrated circuit (IC) and comprising a charge pump (1) whose input voltage is a supply voltage ($V_{DD}$) of the integrated circuit (IC) and which is clocked by direct clock signals ($\Phi$) and complemented clock signals ($\bar{\Phi}$), **characterised in that** it comprises means (5) for reinjecting a fraction ($V_{IN}$) of a voltage from said charge pump ($V_{HV}$) at the input (6) to which said supply voltage ($V_{DD}$) is applied.

**2.** Generator according to claim 1, **characterised in that** said re-injection means (5) comprise an adiabatic reducer.

**3.** Generator according to any of claims 1 or 2, **characterised in that** the re-injection coefficient ($\rho$) of said re-injection means (5) is in the range from 0 to 1.

**4.** Generator according to claim 3, **characterised in that** the re-injection coefficient ($\rho$) is equal to 0.5.

**5.** Generator according to any of claims 2 to 4, **characterised in that** said adiabatic reducer (5) comprises two capacitors (C1, C2) and switching means (T1 to T4; T1, T3, T4, D1) for connecting said capacitors alternately in series to said voltage ($V_{HV}$) from the charge pump and in parallel to supply said voltage fraction ($V_{IN}$).

**6.** Generator according to claim 5, **characterised in that** said capacitors have the same capacitance.

**7.** Generator according to any of claims 5 or 6, **characterised in that** the working frequency of said charge pump (1) is equal to the clock frequency of said switching means (T1 to T4; T1, T3, T4, D1).

**8.** Integrated circuit comprising a high voltage generator according to any of claims 1 to 7, **characterised in that** it comprises an EEPROM powered by said high voltage generator (GHT).

## Fig.1

## Fig.2

## Fig.3

## Fig.4